(19) Europäisches Patentamt European Patent Office Office européen des brevets

(11) **EP 3 018 831 B1**

(12) **EUROPEAN PATENT SPECIFICATION**

(45) Date of publication and mention
of the grant of the patent:
**18.10.2017 Bulletin 2017/42**

(51) Int Cl.:
*H04B 3/487* (2015.01)          *H04M 3/30* (2006.01)
*H04M 3/22* (2006.01)

(21) Application number: **14306792.4**

(22) Date of filing: **07.11.2014**

(54) **Method and system for detecting an incorrectly wired line in a vectoring group**

Verfahren und System zur Erkennung einer fehlerhaft verdrahteten Leitung in einer Vektorisierungsgruppe

Procédé et système pour détecter une ligne câblée de manière incorrecte dans un groupe de vectorisation

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.05.2016 Bulletin 2016/19**

(73) Proprietor: **ALCATEL LUCENT**
**92100 Boulogne-Billancourt (FR)**

(72) Inventors:
• **Wahibi, Issam**
**2018 Antwerpen (BE)**

• **Drooghaag, Benoit**
**6041 Gosselies (BE)**
• **Nuzman, Carl Jeremy**
**Murray Hill, NJ07974-0636 (US)**

(74) Representative: **ALU Antw Patent Attorneys**
**Copernicuslaan 50**
**2018 Antwerpen (BE)**

(56) References cited:
**EP-A1- 2 675 074          EP-A1- 2 787 653**
**US-A1- 2013 022 178**

**Description**

Field of Invention

Embodiments of the invention relate to the field of detecting an incorrectly wired line in a vectoring group and in particular to methods and systems for detecting an incorrectly wired line in a vectoring group in a communication system with a plurality of lines between an access node and a plurality of end user nodes.

Background

Vectoring technology has allowed Digital Subscriber Line (DSL) operators to maintain copper support for digital transmissions as a lower-cost alternative to an expensive investment in fiber deployment. This technology is based on the cancellation (or at least reduction) of interference from other DSL lines by performing a pre-compensation (at the transmission) or cancellation (at the receiver) of the crosstalk by exploiting multi-user level coordination in DSL Access Multiplexers (DSLAMs).

Vectoring technology becomes more and more mature and has therefore been selected by several DSL operators for large-scale deployment. This broad deployment provides new challenges to the operators such that they are looking to benefit from all the potential that the vectoring technology has to offer. One of these challenges is to (re)group lines, which share the same physical cable, in the same vectoring group, such that alien crosstalk, coming from other vectoring groups can be minimized.

Indeed, it is perceived by operators that it occurs that lines are not correctly wired in the appropriate vectoring group. Following bad configurations may arise in the field:

- Vectoring lines share the same physical binder, but do not belong to the same vectoring group. Since crosstalk cancellation is applied within the same vectoring group, crosstalk in these lines associated will not be cancelled.

- Vectoring lines belong to the same vectoring group, but do not share the same physical binder. Signal processing in such a vectoring group, applied to those lines to cancel or reduce crosstalk is not efficient, since these lines hardly experience crosstalk from the other lines of the same vectoring group as they are physically separated from the other lines within the vectoring group.

Once such configurations are detected, the operators can take corrective actions like the rewiring of the lines in order to restore a configuration where the maximum of lines can benefit from the vectoring operation or the crosstalk cancellation. The rewiring should be a simple operation because there will be only few lines that may be badly wired.

US 2013/022178 A1 discloses a method for detecting a defect in wiring in a DSL system. The method includes collecting data including instantaneous values, a history of values, and/or parameters relating to a central office or customer premises equipment. The method further includes analysing a line for a wiring defect based on the collected data, and reporting whether or not a wiring defect was detected responsive to the analysing step.

Summary

The object of embodiments of the invention is to provide a method and a system for detecting an incorrectly wired line in a vectoring group in a communication system, without disrupting normal operation of the communication system. Embodiments of the invention aim to provide a method to detect an incorrectly wired line, which method is non-intrusive and which does not require complex and computationally challenging calculations.

According to a first aspect of the invention there is provided a method to detect an incorrectly wired line in a vectoring group in a communication system with a plurality of lines between an access node and a plurality of end user nodes, said communication system being equipped with an internal crosstalk cancellation mechanism for reducing or cancelling internal crosstalk between said plurality of lines. The method comprises measuring at least one operational parameter of said communication system during normal operation of said communication system, and for each line: estimating a first bitrate parameter of said communication system for a situation where said internal crosstalk cancellation mechanism is inactive, based on said measured at least one operational parameter; estimating a second bitrate parameter of said communication system for a situation where said internal crosstalk cancellation mechanism is active, based on said measured at least one operational parameter; estimating a third bitrate parameter of said communication system for a situation without internal and external crosstalk, based on said measured at least one operational parameter; and determining at least whether said line is incorrectly wired in said communication system, based on said first, second and third bitrate parameters.

The technical problem which is addressed, relates to detecting incorrectly wired or cross-wired lines based only on operational parameters that can be determined during normal operation of the communication system.

Known approaches for analyzing the performance of vectoring groups are based on the use of carrier data such as direct transfer function or direct channel gain (Hlog), Power Spectral Density (PSD), Quiet-Line Noise (QLN),... which have to be measured during line initialization and therefore requires forced line resynchronization. Next to being service-intrusive, using these carrier data vectors or frequential vectors requires a lot of memory, resources and complexity.

Other knows approaches (see patent application EP 13 306 636.5 in name of the Applicant) to estimate the performance of vectoring lines provide an estimate for a situation where there is no crosstalk at all in the binder, an estimate where the crosstalk is not cancelled and an estimate where all crosstalkers in the same vectoring group are cancelled, but the alien/external crosstalk is present.

In a previous approach (EP 14 306 244.6), the Applicant has introduced the concepts of a vectoring gain matrix and a vectoring cost matrix in order to analyze the performance of a communication system. Calculation of these matrices however requires a lot of computational power.

Embodiments of the invention are based *inter alia* on the insight that by efficiently interpreting certain bitrate parameters, which are estimated from measuring at least on operational parameter of the communication system during normal operation thereof, an incorrectly wired line can be detected, without performing the required additional complex operations of above discussed methods and without disrupting the system.

By estimating these bitrate parameters for each line of the communication system, a line specific approach is obtained, which allows not only a general assessment of system performance, but also an assessment per line to determine whether that line is incorrectly wired or not. In addition embodiments of the invention provide an accuracy or a confidence, representative for how certain one can be of that line actually being incorrectly wired. This information helps a Network Analyzer to propose a rewiring strategy to optimize the performance and efficiency of the vectoring groups within the communication system.

According to an embodiment, determining at least whether said line is incorrectly wired comprises determining that said line is incorrectly wired when a first difference between said second bitrate parameter and said first bitrate parameter is smaller than a first predefined value, and when a second difference between said third bitrate parameter and said second bitrate parameter is larger than a second predefined value.

This approach allows for computations (difference of two parameters, and comparison with a predefined value), which are computationally less intensive and less complex, as compared to computations needed in prior art approaches.

According to an embodiment the method further comprises generating a first and a second accuracy parameter and a confidence parameter, wherein the first accuracy parameter is representative for an accuracy of said first difference; the second accuracy parameter is representative for an accuracy of said second difference; and the confidence parameter is representative for a confidence of said determining that said line is incorrectly wired.

In addition to comprising only computationally simple operations, this approach generates an accuracy or confidence, which is representative for how reliable the outcome of the detection method is. This is an important parameter that helps a Network Analyzer to propose a rewiring strategy to optimize the performance and efficiency of the vectoring groups within the communication system. For example when the confidence is higher than 50%, the Network Analyzer decides that the incorrectly wired or cross-wired line is detected.

According to an embodiment generating said first accuracy parameter comprises setting said first accuracy parameter to 100% when said first difference is smaller than a first predefined threshold value; setting said first accuracy parameter to 0% when said first difference is larger than a second predefined threshold value; and when said first difference lies between said first and second predefined threshold value, setting said first accuracy parameter to a value, linearly determined between 0% and 100% in correspondence with a relation of said first difference with said first and said second predefined threshold value. Generating said second accuracy parameter comprises setting said second accuracy parameter to 100% when said second difference is smaller than a third predefined threshold value; setting said second accuracy parameter to 0% when said second difference is larger than a fourth predefined threshold value; and when said second difference lies between said third and said fourth predefined threshold value, setting said second accuracy parameter to a value, linearly determined between 0% and 100% in correspondence with a relation of said second difference with said third and said fourth predefined threshold value. Generating said confidence parameter comprises determining a minimum of said first and second accuracy parameter.

This approach allows for efficiently generating accuracy parameters and a confidence parameter, which are conveniently expressed as percentages, which allows for an intuitive interpretation of these accuracy parameters. Again these accuracy parameters can be generated for each line, allowing for a line specific approach.

According to an embodiment, determining at least whether said line is incorrectly wired comprises estimating, based on said first, second and third bitrate parameter, a rewired second bitrate parameter, being representative for said second bitrate parameter in a situation wherein said line would be rewired to an opposite vectoring group. It further comprises comparing said rewired second bitrate parameter with said second bitrate parameter; and determining that said line is incorrectly wired when a ratio between said rewired second bitrate parameter and said second bitrate parameter is larger than a third predefined value.

This approach allows for simulating an effect regarding performance of the system, when a line of one vectoring group would be rewired or transferred to an opposite vectoring group, without actually rewiring the line. This is a powerful tool in search of a rewiring strategy. By comparing the original second bitrate parameter of the line, with the rewired second bitrate parameter corresponding with a simulated rewiring of the line, system performance can efficiently be estimated.

According to an embodiment estimating a rewired second bitrate parameter comprises converting said first, second and third bitrate parameters into corresponding first, second and third noise level parameters and defining said first, second and third noise level parameters in terms of at least one of the parameters of the group comprising background noise, crosstalk noise originating from said vectoring group and crosstalk noise originating from said opposite vectoring group. It further comprises estimating, based on said first, second and third noise level parameters, a rewired second noise level parameter, being representative for said second noise level parameter in a situation wherein said line would be rewired to said opposite vectoring group and converting said rewired second noise level parameter to said rewired second bitrate parameter.

By cleverly converting the obtained bitrate parameters to noise level parameters, and expressing these noise levels in terms of background noise, crosstalk noise coming from the vectoring group of the line and crosstalk coming from an opposite vectoring group, one can express the rewired second noise level parameter in terms of the first, second and third noise level parameters. This rewired second noise level parameter is representative of the noise level which would occur when the according line would be rewired to the opposite vectoring group, and can thus be estimated without actually rewiring the according line. Applying a reversed conversion on this rewired second noise level parameter will result in the rewired second bitrate parameter.

According to an embodiment, the first bitrate parameter is representative for a bitrate over said line in a situation wherein said line suffers from both crosstalk originating from said vectoring group and crosstalk originating from outside of said vectoring group. The second bitrate parameter is representative for a bitrate over said line in a situation wherein crosstalk originating from said vectoring group is cancelled. The third bitrate parameter is representative for a bitrate over said line in a situation wherein both crosstalk originating from said vectoring group and crosstalk origination from outside of said vectoring group are cancelled.

According to another aspect of the invention, there is provided a computer program product comprising computer-executable instructions for performing the method of any one of the claims 1 to 7, when the program is run on a computer.

According to a further aspect of the invention, there is provided a computer program comprising computer-executable instructions to perform the method, when the program is run on a computer, according to any one of the steps of any one of the embodiments disclosed above.

According to a further aspect of the invention, there is provided a computer device or other hardware device programmed to perform one or more steps of any one of the embodiments of the method disclosed above. According to another aspect there is provided a data storage device encoding a program in machine-readable and machine-executable form to perform one or more steps of any one of the embodiments of the method disclosed above.

The skilled person will understand that the hereinabove described technical considerations and advantages for method embodiments also apply to the below described system embodiments, *mutatis mutandis.*

According to a further aspect of the invention, there is provided a system for detecting an incorrectly wired line in a vectoring group in a communication system with a plurality of lines between an access node and a plurality of end user nodes, said communication system being equipped with an internal crosstalk cancellation mechanism for reducing or cancelling internal crosstalk between said plurality of lines. The system comprises:

- a measuring unit configured for measuring at least one operational parameter of said communication system during normal operation of said communication system;
- a first estimating unit configured for estimating for each line a first bitrate parameter of said communication system for a situation where said internal crosstalk cancellation mechanism is inactive, based on said measured at least one operational parameter;
- a second estimating unit configured for estimating for each line a second bitrate parameter of said communication system for a situation where said internal crosstalk cancellation mechanism is active, based on said measured at least one operational parameter;
- a third estimating unit configured for estimating for each line a third bitrate parameter of said communication system for a situation without internal and external crosstalk, based on said measured at least one operational parameter; and
- a determining unit configured for determining for each line at least whether said line is incorrectly wired in said communication system, based on said first, second and third bitrate parameters.

According to an embodiment the determining unit is further configured for determining that said line is incorrectly wired when a first difference between said second bitrate parameter and said first bitrate parameter is smaller than a first predefined value, and when a second difference between said third bitrate parameter and said second bitrate parameter is larger than a second predefined value.

According to an embodiment the system further comprises an accuracy parameter generating unit configured for generating a first and a second accuracy parameter and a confidence parameter, wherein

said first accuracy parameter is representative for an accuracy of said first difference;
said second accuracy parameter is representative for an accuracy of said second difference; and
said confidence parameter is representative for an accuracy of said determining that said line is incorrectly wired.

According to an embodiment the accuracy parameter generating unit is configured for

setting said first accuracy parameter to 100% when said first difference is smaller than a first predefined threshold value; setting said first accuracy parameter to 0% when said first difference is larger than a second predefined threshold value; and when said first difference lies between said first and second predefined threshold value, setting said first accuracy parameter to a value, linearly determined between 0% and 100% in correspondence with a relation of said first difference with said first and said second predefined threshold value;
setting said second accuracy parameter to 100% when said second difference is smaller than a third predefined threshold value; setting said second accuracy parameter to 0% when said second difference is larger than a fourth predefined threshold value; and when said second difference lies between said third and said fourth predefined threshold value, setting said second accuracy parameter to a value, linearly determined between 0% and 100% in correspondence with a relation of said second difference with said third and said fourth predefined threshold value; and
generating said confidence parameter by determining a minimum of said first and second accuracy parameter.

According to an embodiment the determining unit is further configured for estimating, based on said first, second and third bitrate parameter, a rewired second bitrate parameter, being representative for said second bitrate parameter in a situation wherein said line would be rewired to an opposite vectoring group; comparing said rewired second bitrate parameter with said second bitrate parameter; and determining that said line is incorrectly wired when a ratio between said rewired second bitrate parameter and said second bitrate parameter is larger than a third predefined value.

According to an embodiment the determining unit is configured for converting said first, second and third bitrate parameters into corresponding first, second and third noise level parameters; defining said first, second and third noise level parameters in terms of at least one of the parameters of the group comprising background noise, crosstalk noise originating from said vectoring group and crosstalk noise originating from said opposite vectoring group; estimating, based on said first, second and third noise level parameters, a rewired second noise level parameter, being representative for said second noise level parameter in a situation wherein said line would be rewired to said opposite vectoring group; and converting said rewired second noise level parameter to said rewired second bitrate parameter.

According to an embodiment, the first bitrate parameter is representative for a bitrate over said line in a situation wherein said line suffers from both crosstalk originating from said vectoring group and crosstalk originating from outside of said vectoring group. The second bitrate parameter is representative for a bitrate over said line in a situation wherein crosstalk originating from said vectoring group is cancelled. The third bitrate parameter is representative for a bitrate over said line in a situation wherein both crosstalk originating from said vectoring group and crosstalk origination from outside of said vectoring group are cancelled.

Brief description of the figures

The accompanying drawings are used to illustrate presently preferred non-limiting exemplary embodiments of methods and systems of the present invention. The above and other advantages of the features and objects of the invention will become more apparent and the invention will be better understood from the following detailed description when read in conjunction with the accompanying drawings, in which:

Figure 1 illustrates possible configurations of vectoring groups comprising incorrectly wired lines;
Figure 2 is a flowchart illustrating an embodiment of an exemplary method to detect an incorrectly wired line in a vectoring group in a communication system;
Figure 3 is a graph that illustrates obtained bitrate parameters of two opposing vectoring groups;
Figure 4 illustrates the concept of accuracy parameters;
Figure 5 is a graph that illustrates the ratio between the rewired second bitrate parameter and the second bitrate parameter for different lines of a vectoring group; and

Figure 6 is a schematic drawing of an exemplary embodiment of a system for detecting an incorrectly wired line in a vectoring group in a communication system.

Description of embodiments

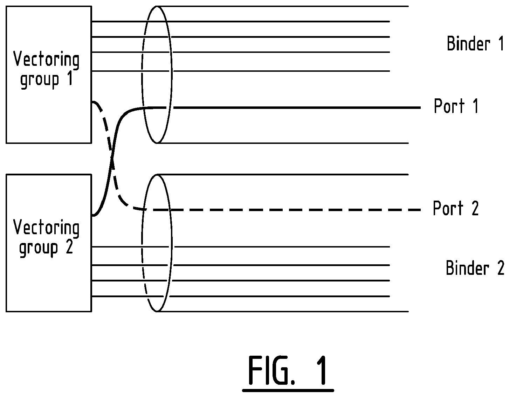

Figure 1 illustrates possible configurations that may occur in a communication system, wherein a line, or multiple lines within one or more vectoring groups are cross-wired, or incorrectly wired. Incorrectly wired lines comprise cross-wired lines between at least two vectoring groups. Incorrectly wired lines will cause problems with regards to crosstalk cancellation as described in following two situations:

- Vectoring lines share the same physical binder, but do not belong to the same vectoring group. See for example the line associated with port 2, which belongs to vectoring group 1, but runs through physical binder 2. Since crosstalk cancellation is applied within the same vectoring group, crosstalk in the line associated with port 2 will not be cancelled.

- Vectoring lines belong to the same vectoring group, but do not share the same physical binder. See for example the line associated with port 1 in relation to vectoring group 2. Signal processing in vectoring group 2, applied to the line associated with port 1 to cancel or reduce crosstalk is not efficient, since this line hardly experiences crosstalk from the lines of the same vectoring group 2 as it is physically separated from the other lines within the vectoring group 2.

To resolve the above described bad configurations, the line associated with port 1 and the line associated with port 2 should be swapped, or rewired such that all lines within a vectoring group are comprised within the same physical binder. Such a configuration will allow crosstalk cancellation algorithms to be more efficient.

Embodiments of the invention aim to detect these incorrectly wired lines and propose a rewiring strategy.

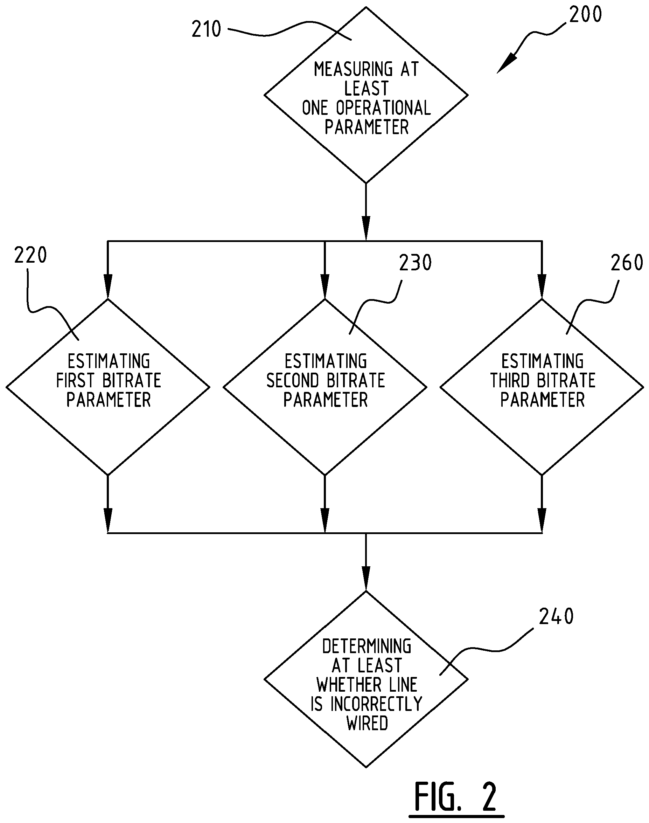

Figure 2 is a flowchart, schematically illustrating a method 200 to detect an incorrectly wired line in a vectoring group in a communication system with a plurality of lines between an access node and a plurality of end user nodes, said communication system being equipped with an internal crosstalk cancellation mechanism for reducing or cancelling internal crosstalk between said plurality of lines. The method comprises a step 210 of measuring at least one operational parameter of said communication system during normal operation of said communication system, and for each line: a step 220 of estimating a first bitrate parameter of said communication system for a situation where said internal crosstalk cancellation mechanism is inactive, based on said measured at least one operational parameter; a step 230 of estimating a second bitrate parameter of said communication system for a situation where said internal crosstalk cancellation mechanism is active, based on said measured at least one operational parameter; a step 260 of estimating a third bitrate parameter of said communication system for a situation without internal and external crosstalk (wherein said line is considered to be 'alone in the world', and is not affected by crosstalk originating from other internal (from the same vectoring group) or external (from other vectoring groups) lines), based on said measured at least one operational parameter; and a step 240 of determining at least whether said line is incorrectly wired in said communication system, based on said first, second and third bitrate parameters.

A method for estimating the first, second and third bitrate parameter from one ore more operational parameters was introduced in patent application EP 13 306 636. Following expressions are hereby introduced:

- full-FEXT bitrate: the bitrate when the line suffers from both internal and alien crosstalk.(= First bitrate parameter)
- full-cancellation bitrate: the bitrate when all the internal crosstalk has been cancelled. (= Second bitrate parameter)
- free-FEXT bitrate: The bitrate when all internal and alien/external crosstalk have been canceled. (= Third bitrate parameter)

In the above expressions FEXT stands for Far End Crosstalk.

In a preferred embodiment of the invention the first bitrate parameter is representative for a bitrate over said line in a situation wherein said line suffers from both crosstalk originating from said vectoring group and crosstalk originating from outside of said vectoring group. The second bitrate parameter is representative for a bitrate over said line in a situation wherein crosstalk originating from said vectoring group is cancelled. The third bitrate parameter is representative for a bitrate over said line in a situation wherein both crosstalk originating from said vectoring group and crosstalk origination from outside of said vectoring group are cancelled.

Embodiments of the inventions aim to detect an incorrectly wired line by efficiently interpreting the estimated full-FEXT, full-cancellation and free-FEXT bitrates, which correspond with respectively the first, second and third bitrate parameters, in a manner which does not require computationally heavy operations.

In an embodiment, determining at least whether said line is incorrectly wired comprises determining that said line is incorrectly wired when a first difference between said second bitrate parameter and said first bitrate parameter is smaller than a first predefined value, and when a second difference between said third bitrate parameter and said second bitrate parameter is larger than a second predefined value.

A significant gain between the full-FEXT bitrate and the full-cancellation bitrate can be reported only when the victim line is sharing the same physical binder as the other disturber lines belonging to the same vectoring group. Otherwise, the crosstalk caused by this line at the other victims lines, or the crosstalk caused by the other disturber lines at this line will be very weak or null.

Therefore, if the line is not correctly wired to the right vectoring group, the crosstalk cancellation will not have caused any gain in terms of bitrate improvement. Accordingly, the first difference between the full-FEXT bitrate and the full-cancellation bitrate will be very small or null.

On the other hand, the suspected incorrectly wired line will be impacted by a significant amount of alien crosstalk coming from lines which are sharing the same physical binder but not the same vectoring group. This means that the amount of alien crosstalk is significant. Therefore, the second difference between the free-FEXT bitrate and the full-cancellation bitrate becomes large.

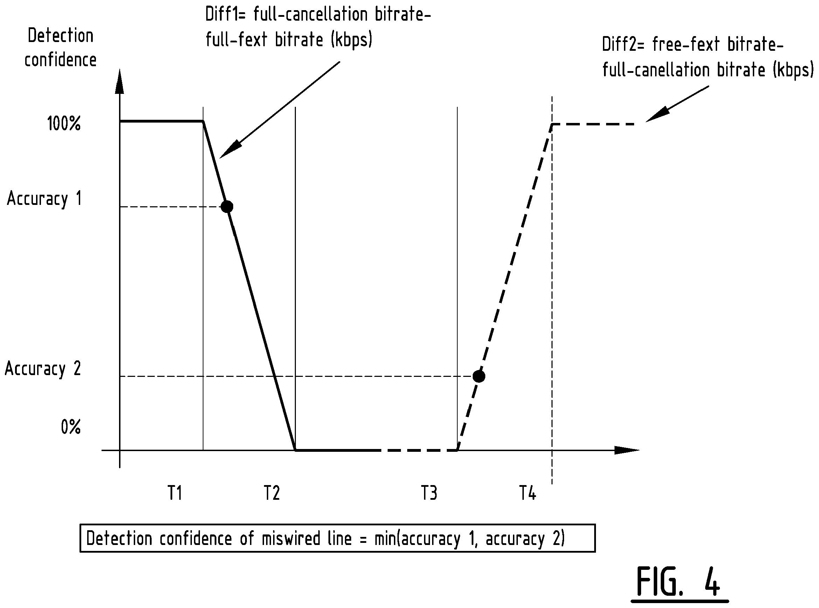

For this reason and in order to detect the incorrectly wired line in a vectoring group, it is necessary to check the first difference between the full-cancellation bitrate and the full-FEXT bitrate (diff 1 in Figure 4), and the free-FEXT bitrate and the full-cancellation bitrate (diff 2 in Figure 4).

In an embodiment, the above mentioned predefined values are first proposed by default by the Network Analyzer after analyzing the data in Lab and in field trial. These predefined values can also be configurable and modified by the operator via the GUI of the Network Analyzer.

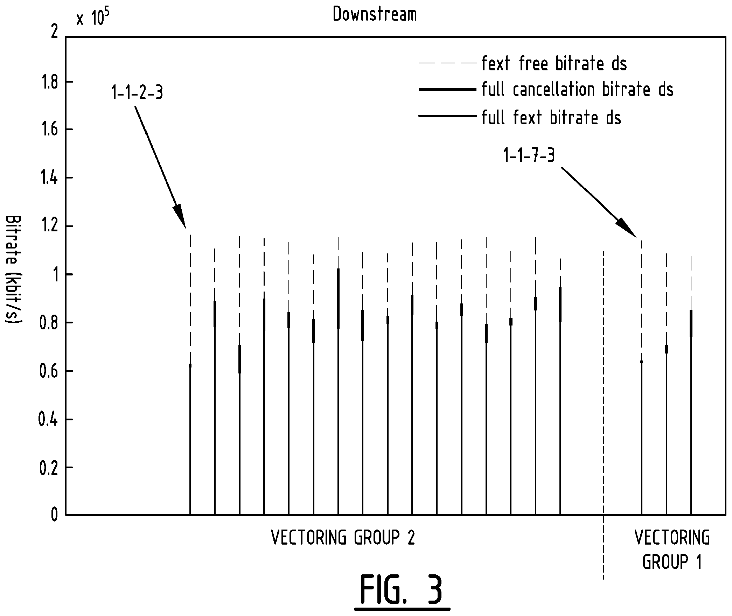

Figure 3 illustrates an example of a lab setup as described in Figure 1 wherein an incorrectly line in vectoring group 1 is located at port1:1-1-2-3 and an incorrectly wired line in vectoring group 2 is located at port 2:1-1-7-3. It is clear that for these specific lines the difference between the full-FEXT bitrate and the full-cancellation bitrate is very small, and in addition the difference between the free-FEXT bitrate and the full-cancellation bitrate is significant, and therefore incorrectly wired lines can be suspected. Although the represented bitrate parameters in Figure 3 concern downstream bitrates, it is clear to the skilled person that the same approach can be used for upstream bitrates.

According to an embodiment the method further comprises generating a first and a second accuracy parameter and a confidence parameter, wherein the first accuracy parameter is representative for an accuracy of said first difference; the second accuracy parameter is representative for an accuracy of said second difference; and the confidence parameter is representative for a confidence of said determining that said line is incorrectly wired.

This approach generates an accuracy or confidence, which is representative for how reliable the outcome of the detection method is. This is an important parameter that can help a Network Analyzer to propose a rewiring strategy to optimize the performance and efficiency of the vectoring groups within the communication system.

According to an embodiment, illustrated in Figure 4, generating said first accuracy parameter comprises setting said first accuracy parameter to 100% when said first difference (diff1) is smaller than a first predefined threshold value (T1); setting said first accuracy parameter to 0% when said first difference (diff2) is larger than a second predefined threshold value (T2); and when said first difference lies between said first (T1) and second (T2) predefined threshold value, setting said first accuracy parameter to a value, linearly determined between 0% and 100% in correspondence with a relation of said first difference (diff1) with said first (T1) and said second (T2) predefined threshold value. Generating said second accuracy parameter comprises setting said second accuracy parameter to 100% when said second difference (diff2) is smaller than a third predefined threshold value (T3); setting said second accuracy parameter to 0% when said second difference (diff2) is larger than a fourth predefined threshold value (T4); and when said second difference (diff2) lies between said third (T3) and said fourth (T4) predefined threshold value, setting said second accuracy parameter to a value, linearly determined between 0% and 100% in correspondence with a relation of said second difference (diff2) with said third (T3) and said fourth (T4) predefined threshold value. Generating said confidence parameter comprises determining a minimum of said first and second accuracy parameter.

As illustrated in Figure 4, the first accuracy parameter (accuracy 1),related to the first difference (diff1) between the full-cancellation bitrate and the full-FEXT bitrate is computed as follows:

- If diff1 < T1, then accuracy 1 = 100%
- If diff1 > T2, then accuracy 1 = 0%
- Otherwise, accuracy 1 is linear between 0% and 100%.

The second accuracy parameter (accuracy 2), related to the second difference (diff2) between the free-FEXT bitrate and the full-cancellation bitrate is computed as follows:

- If diff2 > T4, then accuracy 2 = 100%
- If diff2 < T3, then accuracy 2 = 0%
- Otherwise, accuracy 2 is linear between 0% and 100%.

The confidence parameter, being representative for the global detection confidence of an incorrectly wired line in a vectoring group can be computed as follows:

- Confidence parameter = minimum(accuracy 1, accuracy 2).

According to an embodiment, determining at least whether said line is incorrectly wired comprises estimating, based on said first, second and third bitrate parameter, a rewired second bitrate parameter, being representative for said second bitrate parameter in a situation wherein said line would be rewired to an opposite vectoring group. It further comprises comparing said rewired second bitrate parameter with said second bitrate parameter; and determining that said line is incorrectly wired when a ratio between said rewired second bitrate parameter and said second bitrate parameter is larger than a third predefined value.

In this embodiment the three estimated bitrate parameters for each line (full-FEXT, full-cancellation, and FEXT-free) are analyzed or interpreted to estimate the bitrate impact of rewiring a given line from its current vectoring group to the opposite vectoring group (assuming a two-group system). In other words, the estimated first, second and third bitrate parameters will be used to estimate a hypothetical rewired second bitrate parameter, thus a hypothetical rewired full-cancellation bitrate. This approach allows to predict the impact of rewiring that particular line by comparing the current full-cancellation bitrate, with the rewired full-cancellation bitrate, which corresponds with the full-cancellation bitrate in the hypothetical situation of that line being rewired, without performing an actual rewiring.

According to an embodiment estimating a rewired second bitrate parameter ($R_{\{full-cancellation\_rewired\}}$) comprises converting said first, second ($R_{\{full-cancellation\}}$) and third bitrate parameters into corresponding first ($N_{\{full-FEXT\}}$), second ($N_{\{full-cancellation\}}$) and third ($N_{\{FEXT-free\}}$) noise level parameters and defining said first, second and third noise level parameters in terms of at least one of the parameters of the group comprising background noise ($N_{\{background\}}$), crosstalk noise originating from said vectoring group ($XT_{\{original\_group\}}$) and crosstalk noise originating from said opposite vectoring group ($XT_{\{opposite\_group\}}$). It further comprises estimating, based on said first, second and third noise level parameters, a rewired second noise level parameter ($N_{\{full-cancellation\_rewired\}}$), being representative for said second noise level parameter in a situation wherein said line would be rewired to said opposite vectoring group and converting said rewired second noise level parameter to said rewired second bitrate parameter. This process can be divided in four steps which are further explained below:

(1) A first step is to convert the bitrate or bitrate parameter into a nominal or average noise level parameter. The bitrate on a given line can be expressed as:

$$R = f_s \sum_{i=1}^{N} b_i$$

Wherein $f_s$ is the symbol frequency and $b_i$ the bit-loading of tone i. For the sake of analysis, a working assumption can be made that all tones have the same bitloading b, which would be $b = R/(Nf_s)$, with N the number of tones. This nominal bitloading can be mapped to a nominal noise-to-signal ratio (NSR) $\eta$ by inverting equation (a): $b = \log_2(1+1/(\Gamma \eta))$ wherein r is a gap parameter.

In this way, nominal NSR values are obtained for full-FEXT, full-cancellation, and FEXT-free conditions and thus the corresponding first, second and third bitrate parameters.

(2) The second step is to analyze these NSR values for each line as described below, to get an estimate of what the full-cancellation NSR (rewired second noise level parameter) would be if the line were rewired. The NSR levels in the three situations can be written as:

$$N\_\{FEXT\text{-}free\} = N\_\{background\}$$

$$N\_\{full\text{-}cancellation\} = N\_\{background\} + XT\_\{opposite\_group\}$$

$$N\_\{full\text{-}FEXT\} = N\_\{background\} + XT\_\{opposite\_group\} + XT\_\{original\_group\}$$

After switching the given line from the original group to the opposite group, the full-cancellation noise level would be:

$$N\_\{full\text{-}cancellation\_rewired\} = N\_\{background\} + XT\_\{original\_group\}$$

This can be expressed in terms of the other three NSRs as:

$$N\_\{full\text{-}cancellation\_rewired\} = N\_\{FEXT\text{-}free\} + N\_\{full\text{-}FEXT\} - N\_\{full\_cancellation\}$$

(3) The third step is to convert the nominal rewired NSR into an estimated rewired bitrate. First, equation (a) is applied with $\eta = N\_\{full\text{-}cancellation\_rewired\}$ to obtain the nominal rewired bitloading b', and then the rewired bitrate is estimated as $R\_\{full\text{-}cancellation\_rewired\} = b'Nf_s$.

(4) In the fourth step, the estimated improvement $\theta$ (%) after (hypothetical) rewiring can be expressed as:

$\theta = 100 * (R\_\{full\text{-}cancellation\_rewired\}/R\_\{full\_cancellation\} -1)$. Lines with a high positive value for this parameter $\theta$ are good candidates for rewiring.

Although for the above described steps a communication system of two vectoring groups was assumed, it is clear to the skilled person that the same procedure can be followed when considering three or more vectoring groups. For the sake of completeness, step (2) for a scenario with three vectoring groups is briefly discussed below. Other steps can be executed in a similar way as discussed below.

Assuming three vectoring groups [1], [2] and [3], the definitions for the noise level parameters for vectoring group [1] are given by:

$$N\_\{FEXT\text{-}free\}[1] = N\_\{backgroud\}$$

$$N\_\{full\_cancellation\}[1] = N\_\{background\}+XT\_[2]+XT\_[3]$$

$$N\_\{full\text{-}FEXT\}[1] = N\_\{background\}+XT\_[1]+XT\_[2]+XT\_[3]$$

With XT_[i], the crosstalk coming from vectoring group i.

From these noise level parameters, a lower and upper bound can be defined, between which the best case rewired second noise level parameter will be situated. With best case is meant that the most suitable vectoring group to rewire the line to, is chosen (out of vectoring groups [2] and [3]). The lower bound is defined as:

$$N\_\{rewired\_lower\_bound\} = N\_\{FEXT\text{-}free\}[1] + N\_\{full\text{-}FEXT\}[1] - N\_\{full\_cancellation\}[1]$$
$$= N\_\{background\}+XT\_[1];$$

whereas the upper bound is defined as:

$$N\_\{rewired\_upper\_bound\} = 1/2 \ ( N\_\{rewired\_lower\_bound\} + N\_\{full\text{-}FEXT\}[1] )$$
$$= N\_\{background\} + XT\_[1] + 1/2( XT\_[2] + XT\_[3]).$$

Therefore it is possible to determine non-intrusively that, when rewiring the line to the best choice among vectoring groups [2] and [3], the rewired performance will lie between these bounds. Now two hypothetical rewired second noise level parameters can be distinguished, rewired from [1] to [2], and rewired from [1] to [3]:

$$N\_\{full\text{-}cancellation\_rewired\}[1 \text{ to } 2] = N\_\{background\}+XT\_[1]+XT\_[3]$$

and

$$N\_\{\text{full-cancellation\_rewired}\}[1\ to\ 3] = N\_\{\text{background}\}+XT\_[1]+XT\_[2].$$

To illustrate the relevance of the above mentioned bounds, it is clear that when the line from vectoring group [1] is rewired to the most suitable vectoring group from [2] and [3], the rewired noise level parameter would be the smallest of the [1 to 2] and [1 to 3] noise level parameters:

$$N\_\{\text{full-cancellation\_rewired}\}[1\ to\ best\ \{[2],[3]\}] = \min(\ N\_\{\text{full-cancellation\_rewired}\}[1\ to\ 2],$$

$$N\_\{\text{full-cancellation\_rewired}\}[1\ to\ 3]) = N\_\{\text{background}\} + XT\_[1] + \min(\ XT\_[2],\ XT[3]\ ).$$

In addition it is clear that for any crosstalk levels XT_[2], XT_[3], it applies that:

$$0 \leq \min\ (XT\_[2], XT\_[3]\ ) \leq \text{mean}(\ XT\_[2], XT\_[3]\ ) = \tfrac{1}{2}\ (\ XT\_[2] + XT\_[3]\ );$$

which implies that:

$$N\_\{\text{rewired\_lower\_bound}\} \leq N\_\{\text{full-cancellation\_rewired}\}[1\ to\ best\ \{[2],[3]\}] \leq$$

$$N\_\{\text{rewired\_upper\_bound}\}.$$

When the rewired lower and upper bounds show sufficient potential, an operator could perform an intrusive procedure to determine which group the line should be rewired to.

These noise level parameters can also be converted back to bitrate parameters (step (3)) and an estimated improvement after rewiring in terms of bitrate can be computed (step (4)) according to the previously discussed manner.

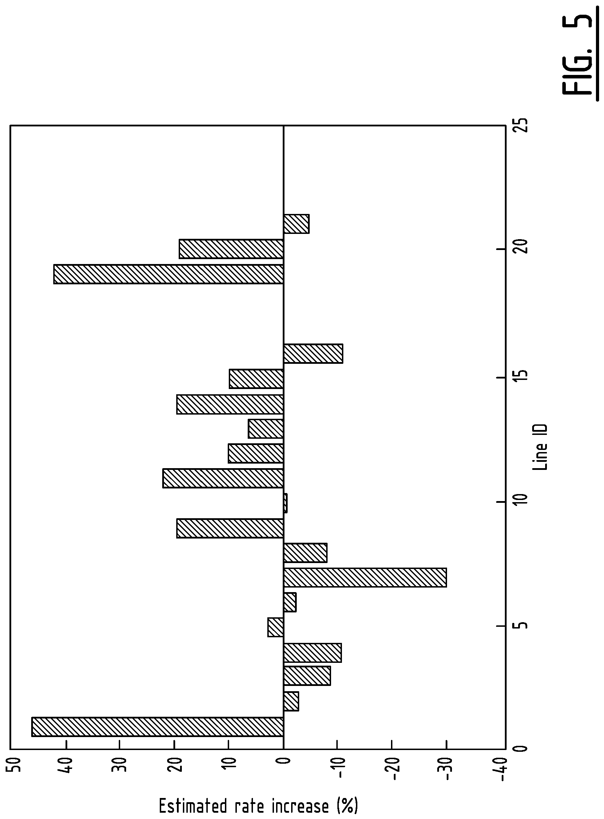

Figure 5 illustrates the estimated increase in bitrate ($\theta$) for the set of lines whose bitrates are specified in Figure 3. The line ID in Figure 5 corresponds with the position (from left to right) of the bar of the same line in Figure 3. In this case, two lines have very high predicted improvements. After rewiring a small number of lines, the bitrate estimation and analysis can be repeated. In a preferred situation, with very little crosstalk between vectoring groups, the projected improvements should all be negative.

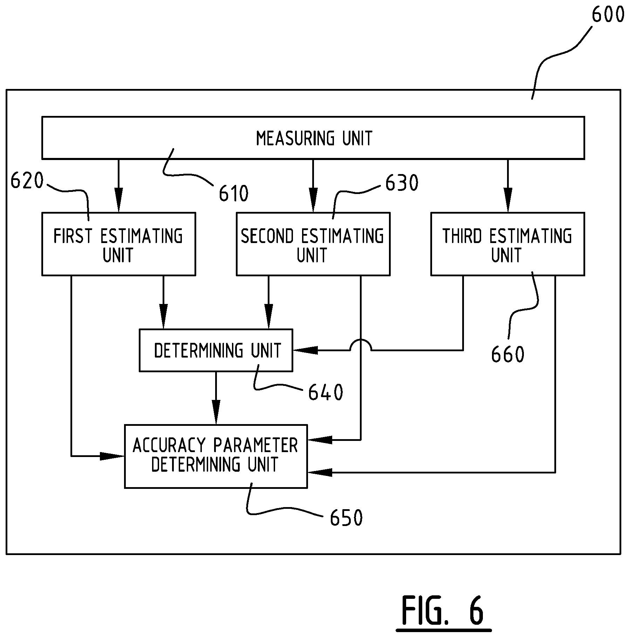

Figure 6 illustrates a system 600 for detecting an incorrectly wired line in a vectoring group in a communication system with a plurality of lines between an access node and a plurality of end user nodes, said communication system being equipped with an internal crosstalk cancellation mechanism for reducing or cancelling internal crosstalk between said plurality of lines. The system comprises:

- a measuring unit 610 configured for measuring at least one operational parameter of said communication system during normal operation of said communication system;
- a first estimating unit 620 configured for estimating for each line a first bitrate parameter of said communication system for a situation where said internal crosstalk cancellation mechanism is inactive, based on said measured at least one operational parameter;
- a second estimating unit 630 configured for estimating for each line a second bitrate parameter of said communication system for a situation where said internal crosstalk cancellation mechanism is active, based on said measured at least one operational parameter;
- a third estimating unit 660 configured for estimating for each line a third bitrate parameter of said communication system for a situation without internal and external crosstalk, based on said measured at least one operational parameter; and
- a determining unit 640 configured for determining for each line at least whether said line is incorrectly wired in said communication system, based on said first, second and third bitrate parameters.

According to an embodiment the determining unit 640 is further configured for determining that said line is incorrectly wired when a first difference between said second bitrate parameter and said first bitrate parameter is smaller than a first predefined value, and when a second difference between said third bitrate parameter and said second bitrate parameter is larger than a second predefined value.

According to an embodiment the system 600 further comprises an accuracy parameter generating unit 650

configured for generating a first and a second accuracy parameter and a confidence parameter, wherein said first accuracy parameter is representative for an accuracy of said first difference; said second accuracy parameter is representative for an accuracy of said second difference; and said confidence parameter is representative for a confidence of said determining that said line is incorrectly wired.

According to an embodiment the accuracy parameter generating unit 650 is configured for

setting said first accuracy parameter to 100% when said first difference is smaller than a first predefined threshold value; setting said first accuracy parameter to 0% when said first difference is larger than a second predefined threshold value; and when said first difference lies between said first and second predefined threshold value, setting said first accuracy parameter to a value, linearly determined between 0% and 100% in correspondence with a relation of said first difference with said first and said second predefined threshold value;
setting said second accuracy parameter to 100% when said second difference is smaller than a third predefined threshold value; setting said second accuracy parameter to 0% when said second difference is larger than a fourth predefined threshold value; and when said second difference lies between said third and said fourth predefined threshold value, setting said second accuracy parameter to a value, linearly determined between 0% and 100% in correspondence with a relation of said second difference with said third and said fourth predefined threshold value; and
generating said confidence parameter by determining a minimum of said first and second accuracy parameter.

According to an embodiment the determining unit 640 is further configured for estimating, based on said first, second and third bitrate parameter, a rewired second bitrate parameter, being representative for said second bitrate parameter in a situation wherein said line would be rewired to an opposite vectoring group; comparing said rewired second bitrate parameter with said second bitrate parameter; and determining that said line is incorrectly wired when a ratio between said rewired second bitrate parameter and said second bitrate parameter is larger than a third predefined value.

According to an embodiment the determining unit 640 is configured for converting said first, second and third bitrate parameters into corresponding first, second and third noise level parameters; defining said first, second and third noise level parameters in terms of at least one of the parameters of the group comprising background noise, crosstalk noise originating from said vectoring group and crosstalk noise originating from said opposite vectoring group; estimating, based on said first, second and third noise level parameters, a rewired second noise level parameter, being representative for said second noise level parameter in a situation wherein said line would be rewired to said opposite vectoring group; and converting said rewired second noise level parameter to said rewired second bitrate parameter.

According to an embodiment, the first bitrate parameter is representative for a bitrate over said line in a situation wherein said line suffers from both crosstalk originating from said vectoring group and crosstalk originating from outside of said vectoring group. The second bitrate parameter is representative for a bitrate over said line in a situation wherein crosstalk originating from said vectoring group is cancelled. The third bitrate parameter is representative for a bitrate over said line in a situation wherein both crosstalk originating from said vectoring group and crosstalk origination from outside of said vectoring group are cancelled.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the figures, including any functional blocks labelled as "processors", "modules" or "units", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor", "controller" or "unit" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Whilst the principles of the invention have been set out above in connection with specific embodiments, it is to be understood that this description is merely made by way of example and not as a limitation of the scope of protection which is determined by the appended claims.

**Claims**

1. A method (200) to detect an incorrectly wired line in a vectoring group, which incorrectly wired line does not share a same physical binder with other lines of said vectoring group, in a DSL communication system with a plurality of lines between an access node and a plurality of end user nodes, said DSL communication system being equipped with an internal crosstalk cancellation mechanism for reducing or cancelling internal crosstalk between said plurality of lines, said method comprising:

   - measuring (210) at least one operational parameter of said DSL communication system during normal operation of said communication system; and for each line:

      - estimating (220), based on said measured at least one operational parameter, a first bitrate parameter of said DSL communication system for a situation where said internal crosstalk cancellation mechanism is inactive;
      - estimating (230), based on said measured at least one operational parameter, a second bitrate parameter of said DSL communication system for a situation where said internal crosstalk cancellation mechanism is active;
      - estimating (260), based on said measured at least one operational parameter, a third bitrate parameter of said DSL communication system for a situation without internal and external crosstalk; and
      - determining (240) at least whether said line is incorrectly wired in said DSL communication system, based on said first, second and third bitrate parameters.

2. The method (200) according to claim 1, wherein determining (240) at least whether said line is incorrectly wired comprises determining that said line is incorrectly wired when a first difference between said second bitrate parameter and said first bitrate parameter is smaller than a first predefined value, and when a second difference between said third bitrate parameter and said second bitrate parameter is larger than a second predefined value.

3. The method (200) according to claim 2, further comprising generating a first and a second accuracy parameter and a confidence parameter, wherein

   said first accuracy parameter is representative for an accuracy of said first difference;
   said second accuracy parameter is representative for an accuracy of said second difference; and
   said confidence parameter is representative for a confidence of said determining that said line is incorrectly wired.

4. The method (200) according to claim 3, wherein

   generating said first accuracy parameter comprises setting said first accuracy parameter to 100% when said first difference is smaller than a first predefined threshold value; setting said first accuracy parameter to 0% when said first difference is larger than a second predefined threshold value; and when said first difference lies between said first and second predefined threshold value, setting said first accuracy parameter to a value, linearly determined between 0% and 100% in correspondence with a relation of said first difference with said first and said second predefined threshold value;
   generating said second accuracy parameter comprises setting said second accuracy parameter to 100% when said second difference is smaller than a third predefined threshold value; setting said second accuracy parameter to 0% when said second difference is larger than a fourth predefined threshold value; and when said second difference lies between said third and said fourth predefined threshold value, setting said second accuracy parameter to a value, linearly determined between 0% and 100% in correspondence with a relation of said second difference with said third and said fourth predefined threshold value; and
   generating said confidence parameter comprises determining a minimum of said first and second accuracy parameter.

5. The method (200) according to claim 1, wherein determining (240) at least whether said line is incorrectly wired comprises estimating, based on said first, second and third bitrate parameter, a rewired second bitrate parameter being representative for said second bitrate parameter in a situation wherein said line would be rewired to another vectoring group; comparing said rewired second bitrate parameter with said second bitrate parameter; and determining that said line is incorrectly wired when a ratio between said rewired second bitrate parameter and said second bitrate parameter is larger than a third predefined value.

6. The method (200) according to claim 5, wherein estimating a rewired second bitrate parameter comprises converting said first, second and third bitrate parameters into corresponding first, second and third noise level parameters; defining said first, second and third noise level parameters in terms of at least one of the parameters of the group comprising background noise, crosstalk noise originating from said vectoring group and crosstalk noise originating from said other vectoring group; estimating, based on said first, second and third noise level parameters, a rewired second noise level parameter, being representative for said second noise level parameter in a situation wherein said line would be rewired to said other vectoring group; and converting said rewired second noise level parameter to said rewired second bitrate parameter.

7. The method (200) according to any one of the preceding claims, wherein

said first bitrate parameter is representative for a bitrate over said line in a situation wherein said line suffers from both crosstalk originating from said vectoring group and crosstalk originating from outside of said vectoring group;
said second bitrate parameter is representative for a bitrate over said line in a situation wherein crosstalk originating from said vectoring group is cancelled; and
said third bitrate parameter is representative for a bitrate over said line in a situation wherein both crosstalk originating from said vectoring group and crosstalk origination from outside of said vectoring group are cancelled.

8. A system (600) for detecting an incorrectly wired line in a vectoring group, which incorrectly wired line does not share a same physical binder with other lines of said vectoring group, for a DSL communication system with a plurality of lines between an access node and a plurality of end user nodes, said DSL communication system being equipped with an internal crosstalk cancellation mechanism for reducing or cancelling internal crosstalk between said plurality of lines, said system comprising:

- a measuring unit (610) configured for measuring at least one operational parameter of said DSL communication system during normal operation of said communication system;
- a first estimating unit (620) configured for estimating, based on said measured at least one operational parameter, for each line a first bitrate parameter of said DSL communication system for a situation where said internal crosstalk cancellation mechanism is inactive;
- a second estimating unit (630) configured for estimating, based on said measured at least one operational parameter, for each line a second bitrate parameter of said DSL communication system for a situation where said internal crosstalk cancellation mechanism is active;
- a third estimating unit (660) configured for estimating, based on said measured at least one operational parameter, for each line a third bitrate parameter of said DSL communication system for a situation without internal and external crosstalk; and
- a determining unit (640) configured for determining for each line at least whether said line is incorrectly wired in said DSL communication system, based on said first, second and third bitrate parameters.

9. The system (600) according to claim 8, wherein the determining unit (640) is further configured for determining that said line is incorrectly wired when a first difference between said second bitrate parameter and said first bitrate parameter is smaller than a first predefined value, and when a second difference between said third bitrate parameter and said second bitrate parameter is larger than a second predefined value.

10. The system (600) according to claim 9, further comprising an accuracy parameter generating unit (650) configured for generating a first and a second accuracy parameter and a confidence parameter, wherein

said first accuracy parameter is representative for an accuracy of said first difference;
said second accuracy parameter is representative for an accuracy of said second difference; and

said confidence parameter is representative for a confidence of said determining that said line is incorrectly wired.

11. The system (600) according to claim 10, wherein the accuracy parameter generating unit (650) is configured for

setting said first accuracy parameter to 100% when said first difference is smaller than a first predefined threshold value; setting said first accuracy parameter to 0% when said first difference is larger than a second predefined threshold value; and when said first difference lies between said first and second predefined threshold value, setting said first accuracy parameter to a value, linearly determined between 0% and 100% in correspondence with a relation of said first difference with said first and said second predefined threshold value; setting said second accuracy parameter to 100% when said second difference is smaller than a third predefined threshold value; setting said second accuracy parameter to 0% when said second difference is larger than a fourth predefined threshold value; and when said second difference lies between said third and said fourth predefined threshold value, setting said second accuracy parameter to a value, linearly determined between 0% and 100% in correspondence with a relation of said second difference with said third and said fourth predefined threshold value; and generating said confidence parameter by determining a minimum of said first and second accuracy parameter.

12. The system (600) according to claim 8, wherein the determining unit (640) is further configured for estimating, based on said first, second and third bitrate parameter, a rewired second bitrate parameter being representative for said second bitrate parameter in a situation wherein said line would be rewired to another vectoring group; comparing said rewired second bitrate parameter with said second bitrate parameter; and determining that said line is incorrectly wired when a ratio between said rewired second bitrate parameter and said second bitrate parameter is larger than a third predefined value.

13. The system (600) according to claim 12, wherein the determining unit (640) is configured for converting said first, second and third bitrate parameters into corresponding first, second and third noise level parameters; defining said first, second and third noise level parameters in terms of at least one of the parameters of the group comprising background noise, crosstalk noise originating from said vectoring group and crosstalk noise originating from said other vectoring group; estimating, based on said first, second and third noise level parameters, a rewired second noise level parameter, being representative for said second noise level parameter in a situation wherein said line would be rewired to said other vectoring group; and converting said rewired second noise level parameter to said rewired second bitrate parameter.

14. The system (600) according to any one of the claims 8 to 13, wherein

said first bitrate parameter is representative for a bitrate over said line in a situation wherein said line suffers from both crosstalk originating from said vectoring group and crosstalk originating from outside of said vectoring group;
said second bitrate parameter is representative for a bitrate over said line in a situation wherein crosstalk originating from said vectoring group is cancelled; and
said third bitrate parameter is representative for a bitrate over said line in a situation wherein both crosstalk originating from said vectoring group and crosstalk origination from outside of said vectoring group are cancelled.

15. A computer program product comprising computer-executable instructions for performing the method (200) of any one of the claims 1 to 7, when the program is run on a computer.

**Patentansprüche**

1. Verfahren (200) zum Erkennen einer nicht korrekt verdrahteten Leitung in einer vektorisierenden Gruppe, wobei die nicht korrekt verdrahtete Leitung nicht ein gleiches physikalisches Bindemittel mit anderen Leitungen der besagten vektorisierenden Gruppe in einem DSL-Kommunikationssystem mit einer Vielzahl von Leitungen zwischen einem Zugangsknoten und einer Vielzahl von Endbenutzerknoten teilt, wobei besagtes DSL-Kommunikationssystem mit einem internen Nebensprechunterdrückungsmechanismus ausgestattet ist zum Verringern oder Unterdrücken von internem Nebensprechen zwischen besagter Vielzahl von Leitungen, wobei besagtes Verfahren umfasst:

- Messen (210) von mindestens einem Betriebsparameter von besagtem DSL-Kommunikationssystem während des normalen Betriebs von besagtem Kommunikationssystem; und für jede Leitung:

- Schätzen (220), aufbauend auf besagtem gemessenen mindestens einem Betriebsparameter, von einem ersten Bitrate-Parameter von besagtem DSL-Kommunikationssystem für eine Situation, in der besagter interner Nebensprechunterdrückungsmechanismus inaktiv ist;
- Schätzen (230), aufbauend auf besagtem gemessenen mindestens einem Betriebsparameter, von einem zweiten Bitrate-Parameter von besagtem DSL-Kommunikationssystem für eine Situation, in der besagter interner Nebensprechunterdrückungsmechanismus aktiv ist;
- Schätzen (260), aufbauend auf besagtem gemessenen mindestens einem Betriebsparameter, von einem dritten Bitrate-Parameter von besagtem DSL-Kommunikationssystem für eine Situation ohne internes und externes Nebensprechen; und
- Ermitteln (240), ob mindestens besagte Leitung nicht korrekt in besagtem DSL-Kommunikationssystem verdrahtet ist, aufbauend auf besagten ersten, zweiten und dritten Parametern.

2. Verfahren (200) nach Anspruch 1, wobei das Ermitteln (240), ob mindestens besagte Leitung nicht korrekt verdrahtet ist, umfasst, dass ermittelt wird, dass besagte Leitung nicht korrekt verdrahtet ist, wenn eine erste Differenz zwischen besagtem zweiten Bitrate-Parameter und besagtem ersten Bitrate-Parameter kleiner als ein erster vordefinierter Wert ist, und wenn eine zweite Differenz zwischen besagtem dritten Bitrate-Parameter und besagtem zweiten Bitrate-Parameter größer ist als ein zweiter vordefinierter Wert.

3. Verfahren (200) nach Anspruch 2, weiterhin umfassend das Erzeugen eines ersten und zweiten Genauigkeitsparameters und eines Vertrauensparameters, wobei

besagter erster Genauigkeitsparameter repräsentativ ist für die Genauigkeit von besagter erster Differenz;
besagter zweiter Genauigkeitsparameter repräsentativ ist für die Genauigkeit von besagter zweiter Differenz; und
besagter Vertrauensparameter repräsentativ ist für ein Vertrauen von besagtem Ermitteln, dass die Leitung nicht korrekt verdrahtet ist.

4. Verfahren (200) nach Anspruch 3, wobei

das Erzeugen des besagten ersten Genauigkeitsparameters das Einstellen von besagtem ersten Genauigkeitsparameter auf 100 % umfasst, wenn besagte erste Differenz kleiner als ein erster vordefinierter Schwellenwert ist; wobei besagter erster Genauigkeitsparameter auf 0 % eingestellt wird, wenn besagte erste Differenz größer als ein zweiter vordefinierter Schwellenwert ist; und wenn besagte erste Differenz zwischen besagtem ersten und zweiten vordefinierten Schwellenwert liegt, der erste Genauigkeitsparameter auf einen Wert eingestellt wird, der linear zwischen 0 % und 100 % ermittelt wird, entsprechend einem Verhältnis von besagter erster Differenz und besagtem ersten und besagtem zweiten vordefinierten Schwellenwert;
das Erzeugen des besagten zweiten Genauigkeitsparameters das Einstellen von besagtem zweiten Genauigkeitsparameter auf 100 % umfasst, wenn besagte zweite Differenz kleiner als ein dritter vordefinierter Schwellenwert ist; wobei besagter zweiter Genauigkeitsparameter auf 0 % eingestellt wird, wenn besagte zweite Differenz größer als ein vierter vordefinierter Schwellenwert ist; und wenn besagte zweite Differenz zwischen besagtem dritten und vierten vordefinierten Schwellenwert liegt, der zweite Genauigkeitsparameter auf einen Wert eingestellt wird, der linear zwischen 0 % und 100 % ermittelt wird, entsprechend einem Verhältnis von besagter zweiter Differenz und besagtem dritten und besagtem viertem vordefinierten Schwellenwert; und
das Erzeugen des besagten Vertrauensparameters das Ermitteln eines Minimums von besagtem ersten und zweiten Genauigkeitsparameter umfasst.

5. Verfahren (200) nach Anspruch 1, wobei das Ermitteln (240), ob mindestens besagte Leitung nicht korrekt verdrahtet ist, das Schätzen, aufbauend auf besagtem ersten, zweiten und dritten Bitrate-Parameter, eines neu verdrahteten zweiten Bitrate-Parameters umfasst, der repräsentativ ist für besagten zweiten Bitrate-Parameter in einer Situation, in der besagte Leitung mit einer anderen vektorisierenden Gruppe neu verdrahtet wäre; das Vergleichen des besagten neu verdrahteten zweiten Bitrate-Parameters mit dem besagten zweiten Bitrate-Parameter; und das Ermitteln, dass besagte Leitung nicht korrekt verdrahtet ist, wenn ein Verhältnis zwischen besagtem neu verdrahteten zweiten Bitrate-Parameter und besagtem zweiten Bitrate-Parameter größer als ein dritter vordefinierter Wert ist.

6. Verfahren (200) nach Anspruch 5, wobei das Schätzen eines neu verdrahteten zweiten Bitrate-Parameters das Umwandeln von besagten ersten, zweiten und dritten Bitrate-Parametern in entsprechende erste, zweite und dritte Rauschpegel-Parameter umfasst; das Definieren von besagten ersten, zweiten und dritten Rauschpegel-Parametern in Hinsicht auf mindestens einen der Parameter der Gruppe, umfassend Hintergrundrauschen, Nebensprechenrauschen, ausgehend von besagter vektorisierender Gruppe, und Nebensprechenrauschen, ausgehend von besagter anderer vektorisierender Gruppe; das Schätzen, aufbauend auf besagten ersten, zweiten und dritten Rauschpegel-Parametern, eines neu verdrahteten zweiten Rauschpegel-Parameters, der repräsentativ ist für besagten zweiten Rauschpegel-Parameter in einer Situation, in der besagte Leitung mit besagter anderer vektorisierender Gruppe neu verdrahtet wäre; und das Umwandeln von besagtem zweiten Rauschpegel-Parameter in besagten neu verdrahteten zweiten Bitrate-Parameter.

7.  Verfahren (200) nach einem beliebigen der vorstehenden Ansprüche, wobei

besagter erster Bitrate-Parameter repräsentativ ist für eine Bitrate über besagte Leitung in einer Situation, in der besagte Leitung sowohl Nebensprechen, ausgehend von besagter vektorisierenden Gruppe, und Nebensprechen, ausgehend von außerhalb der besagten vektorisierenden Gruppe, ausgesetzt ist;
besagter zweiter Bitrate-Parameter repräsentativ ist für eine Bitrate über besagte Leitung in einer Situation, in der Nebensprechen, ausgehend von besagter vektorisierenden Gruppe, unterdrückt wird; und
besagter dritter Bitrate-Parameter repräsentativ ist für eine Bitrate über besagte Leitung in einer Situation, in der sowohl Nebensprechen, ausgehend von besagter vektorisierenden Gruppe, und Nebensprechen, ausgehend von außerhalb der besagten vektorisierenden Gruppe, unterdrückt werden.

8.  System (600) zum Erkennen einer nicht korrekt verdrahteten Leitung in einer vektorisierenden Gruppe, wobei die nicht korrekt verdrahtete Leitung nicht ein gleiches physikalisches Bindemittel mit anderen Leitungen der besagten vektorisierenden Gruppe für ein DSL-Kommunikationssystem mit einer Vielzahl von Leitungen zwischen einem Zugangsknoten und einer Vielzahl von Endbenutzerknoten teilt, wobei besagtes DSL-Kommunikationssystem mit einem internen Nebensprechunterdrückungsmechanismus ausgestattet ist zum Verringern oder Unterdrücken von internem Nebensprechen zwischen besagter Vielzahl von Leitungen, wobei besagtes System umfasst:

- eine Messeinheit (610), konfiguriert zum Messen von mindestens einem Betriebsparameter von besagtem DSL-Kommunikationssystem während des normalen Betriebs von besagtem Kommunikationssystem;
- eine erste Schätzeinheit (620), konfiguriert zum Schätzen, aufbauend auf besagtem gemessenen mindestens einem Betriebsparameter, für jede Leitung von einem ersten Bitrate-Parameter von besagtem DSL-Kommunikationssystem für eine Situation, in der besagter interner Nebensprechunterdrückungsmechanismus inaktiv ist;
- eine zweite Schätzeinheit (630), konfiguriert zum Schätzen, aufbauend auf besagtem gemessenen mindestens einem Betriebsparameter, für jede Leitung von einem zweiten Bitrate-Parameter von besagtem DSL-Kommunikationssystem für eine Situation, in der besagter interner Nebensprechunterdrückungsmechanismus aktiv ist;
- eine dritte Schätzeinheit (660), konfiguriert zum Schätzen, aufbauend auf besagtem gemessenen mindestens einem Betriebsparameter, für jede Leitung von einem dritten Bitrate-Parameter von besagtem DSL-Kommunikationssystem für eine Situation ohne internes und externes Nebensprechen; und
- eine Ermittlungseinheit (640), konfiguriert zum Ermitteln für jede Leitung, ob mindestens besagte Leitung nicht korrekt in besagtem DSL-Kommunikationssystem verdrahtet ist, aufbauend auf besagten ersten, zweiten und dritten Bitrate-Parametern.

9.  System (600) nach Anspruch 8, wobei die Ermittlungseinheit (640) ferner konfiguriert ist zum Ermitteln, dass besagte Leitung nicht korrekt verdrahtet ist, wenn eine erste Differenz zwischen besagtem zweiten Bitrate-Parameter und besagtem ersten Bitrate-Parameter kleiner als ein erster vordefinierter Wert ist, und wenn eine zweite Differenz zwischen besagtem dritten Bitrate-Parameter und besagtem zweiten Bitrate-Parameter größer ist als ein zweiter vordefinierter Wert.

10. System (600) nach Anspruch 9, weiterhin umfassend eine Genauigkeitsparameter-Erzeugungseinheit (650), konfiguriert zum Erzeugen eines ersten und zweiten Genauigkeitsparameters und eines Vertrauensparameters, wobei

besagter erster Genauigkeitsparameter repräsentativ ist für die Genauigkeit von besagter erster Differenz;
besagter zweiter Genauigkeitsparameter repräsentativ ist für die Genauigkeit von besagter zweiter Differenz; und
besagter Vertrauensparameter repräsentativ ist für ein Vertrauen von besagtem Ermitteln, dass die Leitung nicht korrekt verdrahtet ist.

11. System (600) nach Anspruch 10, wobei die Genauigkeitsparameter-Erzeugungseinheit (650) konfiguriert ist zum

Einstellen von besagtem ersten Genauigkeitsparameter auf 100 %, wenn besagte erste Differenz kleiner als ein erster vordefinierter Schwellenwert ist; wobei besagter erster Genauigkeitsparameter auf 0 % eingestellt wird, wenn besagte erste Differenz größer als ein zweiter vordefinierter Schwellenwert ist; und wenn besagte erste Differenz zwischen besagtem ersten und zweiten vordefinierten Schwellenwert liegt, der erste Genauigkeitsparameter auf ein Wert eingestellt wird, der linear zwischen 0 % und 100 % ermittelt wird, entsprechend einem Verhältnis von besagter erster Differenz und besagtem ersten und besagtem zweiten vordefinierten Schwellenwert;

Einstellen von besagtem zweiten Genauigkeitsparameter auf 100 %, wenn besagte zweite Differenz kleiner als ein dritter vordefinierter Schwellenwert ist; wobei besagter zweiter Genauigkeitsparameter auf 0 % eingestellt wird, wenn besagte zweite Differenz größer als ein vierter vordefinierter Schwellenwert ist; und wenn besagte zweite Differenz zwischen besagtem dritten und vierten vordefinierten Schwellenwert liegt, der zweite Genauigkeitsparameter auf einen Wert eingestellt wird, der linear zwischen 0 % und 100 % ermittelt wird, entsprechend einem Verhältnis von besagter zweiter Differenz und besagtem dritten und besagtem viertem vordefinierten Schwellenwert; und

Erzeugen von besagtem Vertrauensparameter durch Ermitteln eines Minimums von besagtem ersten und zweiten Genauigkeitsparameter.

12. System (600) nach Anspruch 8, wobei die Ermittlungseinheit (640) ferner konfiguriert ist zum Schätzen, aufbauend auf besagtem ersten, zweiten und dritten Bitrate-Parameter, eines neu verdrahteten zweiten Bitrate-Parameters, der repräsentativ ist für besagten zweiten Bitrate-Parameter in einer Situation, in der besagte Leitung mit einer anderen vektorisierenden Gruppe neu verdrahtet wäre; zum Vergleichen des besagten neu verdrahteten zweiten Bitrate-Parameters mit dem besagten zweiten Bitrate-Parameter; und zum Ermitteln, dass besagte Leitung nicht korrekt verdrahtet ist, wenn ein Verhältnis zwischen besagtem neu verdrahteten zweiten Bitrate-Parameter und besagtem zweiten Bitrate-Parameter größer als ein dritter vordefinierter Wert ist.

13. System (600) nach Anspruch 12, wobei die Ermittlungseinheit (640) konfiguriert ist zum Umwandeln von besagten ersten, zweiten und dritten Bitrate-Parametern in entsprechende erste, zweite und dritte Rauschpegel-Parameter; zum Definieren von besagten ersten, zweiten und dritten Rauschpegel-Parametern in Hinsicht auf mindestens einen der Parameter der Gruppe, umfassend Hintergrundrauschen, Nebensprechenrauschen, ausgehend von besagter vektorisierender Gruppe, und Nebensprechenrauschen, ausgehend von besagter anderer vektorisierender Gruppe; zum Schätzen, aufbauend auf besagten ersten, zweiten und dritten Rauschpegel-Parametern, eines neu verdrahteten zweiten Rauschpegel-Parameters, der repräsentativ ist für besagten zweiten Rauschpegel-Parameter in einer Situation, in der besagte Leitung mit besagter anderer vektorisierender Gruppe neu verdrahtet wäre; und zum Umwandeln von besagtem zweiten Rauschpegel-Parameter in besagten neu verdrahteten zweiten Bitrate-Parameter.

14. System (600) nach einem beliebigen der Ansprüche 8 bis 13, wobei

besagter erster Bitrate-Parameter repräsentativ ist für eine Bitrate über besagte Leitung in einer Situation, in der besagte Leitung sowohl Nebensprechen, ausgehend von besagter vektorisierenden Gruppe, und Nebensprechen, ausgehend von außerhalb der besagten vektorisierenden Gruppe, ausgesetzt ist;
besagter zweiter Bitrate-Parameter repräsentativ ist für eine Bitrate über besagte Leitung in einer Situation, in der Nebensprechen, ausgehend von besagter vektorisierenden Gruppe, unterdrückt wird; und
besagter dritter Bitrate-Parameter repräsentativ ist für eine Bitrate über besagte Leitung in einer Situation, in der sowohl Nebensprechen, ausgehend von besagter vektorisierenden Gruppe, und Nebensprechen, ausgehend von außerhalb der besagten vektorisierenden Gruppe, unterdrückt werden.

15. Computerprogramm-Produkt, umfassend durch Computer ausführbare Anweisungen zum Durchführen des Verfahrens (200) nach einem beliebigen der Ansprüche 1 bis 7, wenn das Programm auf einem Computer gestartet wird.

## Revendications

1. Procédé (200) pour détecter une ligne incorrectement câblée dans un groupe de vectorisation, ladite ligne incorrectement câblée ne partageant par un même dispositif de liaison physique avec d'autres lignes dudit groupe de vectorisation, dans un système de communication DSL avec une pluralité de lignes entre un noeud d'accès et une pluralité de noeuds d'utilisateur final, ledit système de communication DSL étant équipé d'un mécanisme d'annulation de diaphonie interne pour réduire ou annuler une diaphonie interne entre ladite pluralité de lignes, ledit procédé comprenant les étapes suivantes :

- mesurer (210) au moins un paramètre opérationnel dudit système de communication DSL durant le fonctionnement normal dudit système de communication ; et pour chaque ligne :

- estimer (220), sur la base dudit au moins un paramètre opérationnel mesuré, un premier paramètre de débit binaire dudit système de communication DSL pour une situation où ledit mécanisme d'annulation de diaphonie interne est inactif ;
- estimer (230), sur la base dudit au moins un paramètre opérationnel mesuré, un deuxième paramètre de débit binaire dudit système de communication DSL pour une situation où ledit mécanisme d'annulation de diaphonie interne est actif ;
- estimer (260), sur la base dudit au moins un paramètre opérationnel mesuré, un troisième paramètre de débit binaire dudit système de communication DSL pour une situation sans diaphonies interne et externe ;
- déterminer (240) au moins si ladite ligne est incorrectement câblée dans ledit système de communication DSL, sur la base desdits premier, deuxième et troisième paramètres de débit binaire.

2. Procédé (200) selon la revendication 1, dans lequel déterminer (240) au moins si ladite ligne est incorrectement câblée consiste à déterminer que ladite ligne est incorrectement câblée lorsqu'une première différence entre ledit deuxième paramètre de débit binaire et ledit premier paramètre de débit binaire est inférieure à une première valeur prédéfinie, et lorsqu'une deuxième différence entre ledit troisième paramètre de débit binaire et ledit deuxième paramètre de débit binaire est supérieure à une deuxième valeur prédéfinie.

3. Procédé (200) selon la revendication 2, consistant en outre à générer un premier et un deuxième paramètres de précision et un paramètre de confiance, dans lequel

ledit premier paramètre de précision est représentatif d'une précision de ladite première différence ;
ledit deuxième paramètre de précision est représentatif d'une précision de ladite deuxième différence ; et
ledit paramètre de confiance est représentatif d'une confiance de ladite détermination que ladite ligne est incorrectement câblée.

4. Procédé (200) selon la revendication 3, dans lequel

la génération dudit premier paramètre de précision comprend le réglage dudit premier paramètre de précision sur 100 % lorsque ladite première différence est inférieure à une première valeur de seuil prédéfinie ; régler ledit premier paramètre de précision sur 0 % lorsque ladite première différence est supérieure à une deuxième valeur de seuil prédéfinie ; et lorsque ladite première différence est comprise entre lesdites première et deuxième valeurs de seuil prédéfinies, régler ledit premier paramètre de précision sur une valeur, déterminée linéairement entre 0 % et 100 % en fonction d'une relation de ladite première différence avec lesdites première et deuxième valeurs de seuil prédéfinies ;
la génération dudit deuxième paramètre de précision comprend le réglage dudit deuxième paramètre de précision sur 100 % lorsque ladite deuxième différence est inférieure à une troisième valeur de seuil prédéfinie ; régler ledit deuxième paramètre de précision sur 0 % lorsque ladite deuxième différence est supérieure à une quatrième valeur de seuil prédéfinie ; et lorsque ladite deuxième différence est comprise entre lesdites troisième et quatrième valeurs de seuil prédéfinies, régler ledit deuxième paramètre de précision sur une valeur, déterminée linéairement entre 0 % et 100 % en fonction d'une relation de ladite deuxième différence avec lesdites troisième et quatrième valeurs de seuil prédéfinies ; et
générer ledit paramètre de confiance comprend la détermination d'une valeur minimum desdits premier et deuxième paramètres de précision.

5. Procédé (200) selon la revendication 1, dans lequel déterminer (240) au moins si ladite ligne est incorrectement câblée consiste à estimer, sur la base desdits premier, deuxième et troisième paramètres de débit binaire, un deuxième paramètre de débit binaire re-câblé représentatif dudit deuxième paramètre de débit binaire dans une situation où ladite ligne serait re-câblée à un autre groupe de vectorisation ; à comparer ledit deuxième paramètre de débit binaire re-câblé audit deuxième paramètre de débit binaire ; et à déterminer que ladite ligne est incorrectement câblée lorsqu'un rapport entre ledit deuxième paramètre de débit binaire re-câblé et ledit deuxième paramètre de débit binaire est supérieur à une troisième valeur prédéfinie.

6. Procédé (200) selon la revendication 5, dans lequel estimer un deuxième paramètre de débit binaire re-câblé consiste à convertir lesdits premier, deuxième et troisième paramètres de débit binaire en des premier, deuxième et troisième paramètres de niveau de bruit correspondants ; à définir lesdits premier, deuxième et troisième paramètres de niveau de bruit selon au moins un des paramètres du groupe comprenant le bruit de fond, le bruit diaphonique provenant dudit groupe de vectorisation et le bruit diaphonique provenant dudit autre groupe de vectorisation ; à estimer, sur la base desdits premier, deuxième et troisième paramètres de niveau de bruit, un deuxième paramètre de niveau de bruit re-câblé, représentatif dudit deuxième paramètre de niveau de bruit dans une situation où ladite ligne serait re-câblée audit autre groupe de vectorisation ; et à convertir ledit deuxième paramètre de niveau de bruit re-câblé en deuxième paramètre de débit binaire re-câblé.

**7.** Procédé (200) selon l'une quelconque des revendications précédentes, dans lequel :

ledit premier paramètre de débit binaire est représentatif d'un débit binaire sur ladite ligne dans une situation où ladite ligne subit une diaphonie provenant dudit groupe de vectorisation et d'une diaphonie provenant de l'extérieur dudit groupe de vectorisation ;

ledit deuxième paramètre de débit binaire est représentatif d'un débit binaire sur ladite ligne dans une situation où la diaphonie provenant dudit groupe de vectorisation est annulée ; et

ledit troisième paramètre de débit binaire est représentatif d'un débit binaire sur ladite ligne dans une situation où la diaphonie provenant dudit groupe de vectorisation et la diaphonie provenant de l'extérieur dudit groupe de vectorisation sont annulées.

**8.** Système (600) pour détecter une ligne incorrectement câblée dans un groupe de vectorisation, ladite ligne incorrectement câblée ne partageant par un même dispositif de liaison physique avec d'autres lignes dudit groupe de vectorisation, pour un système de communication DSL avec une pluralité de lignes entre un noeud d'accès et une pluralité de noeuds d'utilisateur final, ledit système de communication DSL étant équipé d'un mécanisme d'annulation de diaphonie interne pour réduire ou annuler une diaphonie interne entre ladite pluralité de lignes, ledit système comprenant :

- une unité de mesure (610) configurée pour mesurer au moins un paramètre opérationnel dudit système de communication DSL durant le fonctionnement normal dudit système de communication ;
- une première unité d'estimation (620) configurée pour estimer, sur la base dudit au moins un paramètre opérationnel mesuré, pour chaque ligne un premier paramètre de débit binaire dudit système de communication DSL pour une situation où ledit mécanisme d'annulation de diaphonie interne est inactif ;
- une deuxième unité d'estimation (630) configurée pour estimer, sur la base dudit au moins un paramètre opérationnel mesuré, pour chaque ligne un deuxième paramètre de débit binaire dudit système de communication DSL pour une situation où ledit mécanisme d'annulation de diaphonie interne est actif ;
- une troisième unité d'estimation (660) configurée pour estimer, sur la base dudit au moins un paramètre opérationnel mesuré, pour chaque ligne un troisième paramètre de débit binaire dudit système de communication DSL pour une situation sans diaphonies interne et externe ; et
- une unité de détermination (640) configurée pour déterminer pour chaque ligne au moins si ladite ligne est incorrectement câblée dans ledit système de communication DSL, sur la base desdits premier, deuxième et troisième paramètres de débit binaire.

**9.** Système (600) selon la revendication 8, dans lequel l'unité de détermination (640) est en outre configurée pour déterminer que ladite ligne est incorrectement câblée lorsqu'une première différence entre ledit deuxième paramètre de débit binaire et ledit premier paramètre de débit binaire est inférieure à une première valeur prédéfinie, et lorsqu'une deuxième différence entre ledit troisième paramètre de débit binaire et ledit deuxième paramètre de débit binaire est supérieure à une deuxième valeur prédéfinie.

**10.** Système (600) selon la revendication 9, comprenant en outre une unité de génération de paramètres de précision (650) configurée pour générer un premier et un deuxième paramètres de précision et un paramètre de confiance, dans lequel

ledit premier paramètre de précision est représentatif d'une précision de ladite première différence ;

ledit deuxième paramètre de précision est représentatif d'une précision de ladite deuxième différence ; et

ledit paramètre de confiance est représentatif d'une confiance de ladite détermination que ladite ligne est incorrectement câblée.

**11.** Système (600) selon la revendication 10, dans lequel l'unité de génération de paramètres de précision (650) est configurée pour

**EP 3 018 831 B1**

régler ledit premier paramètre de précision sur 100 % lorsque ladite première différence est inférieure à une première valeur de seuil prédéfinie ; régler ledit premier paramètre de précision sur 0 % lorsque ladite première différence est supérieure à une deuxième valeur de seuil prédéfinie ; et lorsque ladite première différence est comprise entre lesdites première et deuxième valeurs de seuil prédéfinies, régler ledit premier paramètre de précision sur une valeur, déterminée linéairement entre 0 % et 100 % en fonction d'une relation de ladite première différence avec lesdites première et deuxième valeurs de seuil prédéfinies ;

régler ledit deuxième paramètre de précision sur 100 % lorsque ladite deuxième différence est inférieure à une troisième valeur de seuil prédéfinie ; régler ledit deuxième paramètre de précision sur 0 % lorsque ladite deuxième différence est supérieure à une quatrième valeur de seuil prédéfinie ; et lorsque ladite deuxième différence est comprise entre lesdites troisième et quatrième valeurs de seuil prédéfinies, régler ledit deuxième paramètre de précision sur une valeur, déterminée linéairement entre 0 % et 100 % en fonction d'une relation de ladite deuxième différence avec lesdites troisième et quatrième valeurs de seuil prédéfinies ; et

générer ledit paramètre de confiance en déterminant une valeur minimum desdits premier et deuxième paramètres de précision.

**12.** Système (600) selon la revendication 8, dans lequel l'unité de détermination (640) est en outre configurée pour estimer, sur la base desdits premier, deuxième et troisième paramètres de débit binaire, un deuxième paramètre de débit binaire re-câblé représentatif dudit deuxième paramètre de débit binaire dans une situation où ladite ligne serait re-câblée à un autre groupe de vectorisation ; comparer ledit deuxième paramètre de débit binaire re-câblé audit deuxième paramètre de débit binaire ; et déterminer que ladite ligne est incorrectement câblée lorsqu'un rapport entre ledit deuxième paramètre de débit binaire re-câblé et ledit deuxième paramètre de débit binaire est supérieur à une troisième valeur prédéfinie.

**13.** Système (600) selon la revendication 12, dans lequel l'unité de détermination (640) est configurée pour convertir lesdits premier, deuxième et troisième paramètres de débit binaire en des premier, deuxième et troisième paramètres de niveau de bruit correspondants ; définir lesdits premier, deuxième et troisième paramètres de niveau de bruit selon au moins un des paramètres du groupe comprenant le bruit de fond, le bruit diaphonique provenant dudit groupe de vectorisation et le bruit diaphonique provenant dudit autre groupe de vectorisation ; estimer, sur la base desdits premier, deuxième et troisième paramètres de niveau de bruit, un deuxième paramètre de niveau de bruit re-câblé, représentatif dudit deuxième paramètre de niveau de bruit dans une situation où ladite ligne serait re-câblée audit autre groupe de vectorisation ; et convertir ledit deuxième paramètre de niveau de bruit re-câblé en deuxième paramètre de débit binaire re-câblé.

**14.** Système (600) selon l'une quelconque des revendications 8 à 13, dans lequel :

ledit premier paramètre de débit binaire est représentatif d'un débit binaire sur ladite ligne dans une situation où ladite ligne subit une diaphonie provenant dudit groupe de vectorisation et d'une diaphonie provenant de l'extérieur dudit groupe de vectorisation ;

ledit deuxième paramètre de débit binaire est représentatif d'un débit binaire sur ladite ligne dans une situation où la diaphonie provenant dudit groupe de vectorisation est annulée ; et

ledit troisième paramètre de débit binaire est représentatif d'un débit binaire sur ladite ligne dans une situation où la diaphonie provenant dudit groupe de vectorisation et la diaphonie provenant de l'extérieur dudit groupe de vectorisation sont annulées.

**15.** Produit de programme informatique comprenant des instructions exécutables par un ordinateur pour réaliser le procédé (200) selon l'une quelconque des revendications 1 à 7, lorsque le programme est exécuté sur un ordinateur.

Vectoring group 1

Vectoring group 2

Binder 1

Port 1

Port 2

Binder 2

## FIG. 1

210

200

MEASURING AT
LEAST
ONE OPERATIONAL
PARAMETER

220

ESTIMATING
FIRST BITRATE
PARAMETER

230

ESTIMATING
SECOND BITRATE
PARAMETER

260

ESTIMATING
THIRD BITRATE
PARAMETER

240

DETERMINING
AT LEAST
WHETHER LINE
IS INCORRECTLY
WIRED

<u>FIG. 2</u>

Downstream

- - - fext free bitrate ds
—— full cancellation bitrate ds
—— full fext bitrate ds

1-1-7-3

1-1-2-3

VECTORING GROUP 2

VECTORING GROUP 1

x $10^5$

Bitrate (kbit/s)

2  1.8  1.6  1.4  1.2  1  0.8  0.6  0.4  0.2  0

## FIG. 3

Diff1= full-cancellation bitrate-
full-fext bitrate (kbps)

Diff2= free-fext bitrate-
full-canellation bitrate (kbps)

Detection
confidence

100%

Accuracy 1

Accuracy 2

0%

T1    T2    T3    T4

Detection confidence of miswired line = min(accuracy 1, accuracy 2)

FIG. 4

FIG. 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013022178 A1
- EP 13306636 A
- EP 14306244 A